Europäisches Patentamt

(19) European Patent Office

Office européen des brevets

(11) Publication number: **0 009 366**
**B1**

(12) # EUROPEAN PATENT SPECIFICATION

(45) Date of publication of patent specification: **30.06.82**

(51) Int. Cl.³: **A 23 K 1/00,** A 23 K 3/00, A 23 C 11/00

(21) Application number: **79301873.0**

(22) Date of filing: **12.09.79**

(54) Milk containing animal feed compositions and aqueous feeds based on them.

(30) Priority: **14.09.78 GB 3676878**

(43) Date of publication of application:
**02.04.80 Bulletin 80/7**

(45) Publication of the grant of the patent:
**30.06.82 Bulletin 82/26**

(84) Designated Contracting States:
**AT BE DE FR GB IT NL SE**

(56) References cited:
**DE - A1 - 2 329 654**
**DE - A1 - 2 555 558**
**DE - B - 1 228 133**

(73) Proprietor: **BP NUTRITION (UK) LIMITED**
**Stepfield Witham**
**Essex, CM8 3AB (GB)**

(72) Inventor: **Foxcroft, Paul Douglas**
**BP Nutrition (UK) Limited Stepfield**
**Witham Essex, CM8 3AB (GB)**
Inventor: **Perry, Frederick George**
**BP Nutrition (UK) Limited Stepfield**
**Witham Essex, CM8 3AB (GB)**

(74) Representative: **Eastman, Hugh Leonard**
**BP INTERNATIONAL LIMITED Patents and**
**Licensing Division Chertsey Road**
**Sunbury-on-Thames Middlesex TW16 7LN (GB)**

Courier Press, Leamington Spa, England.

Milk containing animal feed compositions and aqueous feeds based on them

The present invention relates to milk containing compositions to be used as animal feeds and to aqueous feeds based on the compositions.

One known type of milk containing animal feed compositions are the so-called milk replacer compositions, which are normally solid compositions in powder form. Aqueous feeds based on such compositions are also known. The aqueous feeds are used to replace mothers milk in the diet of young mammals such as calves, lambs and kids. A typical milk replacer composition contains protein, carbohydrate, fatty material, mineral salts and vitamins. The protein and carbohydrate are present in major quantities. The protein can be dried milk, skim milk powder or a non-milk protein, for example, soya or microbial protein. The carbohydrate is usually whey powder which can be supplemented with a sugar, e.g. glucose. The fatty material is present in lesser quantities. Some examples of fatty materials are tallow, lard and coconut oil. The mineral salts and vitamins are present in minor quantities. Emulsifiers such as lecithins, colourants, pregelatinised starch and alginates can be present.

A typical milk replacer composition for feeding calves can have the following formulation: skim milk powder 50 to 70 percent; whey powder 25 to 40 percent; fatty materials 8 to 25 percent; mineral salts and vitamins 1 to 5 percent; pregelatinised starch 1 to 3 percent. The percentages are by weight in relation to the total weight of the composition.

The aqueous feeds are made up from the solid compositions by dispersing them in an aqueous liquid. The aqueous liquid can be and usually is water, but skim milk or whey can be used. The aqueous feeds can have a solids content in the range 8 to 20 and more typically 10 to 15 percent by weight in relation to the total weight of the feed.

Another known type of milk containing animal feed composition is skim milk for feeding to pigs. Heat-treated skim milk may be fed to animals as such or skim milk in powder form may be made up into an aqueous feed.

DE - B - 1 228 133 Scholten discloses a reconstitutable milk substitute for calves which comprises skim milk powder, an oil or fat, an emulsifier, a water soluble stabiliser and a non-toxic organic acid. The acid is provided to precipitate casein in the reconstituted milk substitute. The stabiliser is provided for the purposes of maintaining flocculated casein in suspension in the reconstituted product. DE - B - 1 228 133 is not concerned with the problem of protecting the reconstituted product against bacterial contamination over an extended period.

The conventional aqueous feeds are prone to deterioration on storage even at normal ambient temperatures. In consequence it is the customary practice on the farm to make up a fresh batch of the feed from the solid composition for each feeding time. However, it is desirable, in order to minimise the labour required in feeding the animals and for convenience of operation, to provide stabilised aqueous feeds and milk containing compositions which can be made up into such feeds which can be stored for relatively long periods, e.g. several days without deteriorating. The aqueous feed should remain stable throughout the storage period. In particular it should not sour or clot, the number of microbes present should remain as low as possible and the feed should remain acceptable to the animal. It is also important that there should be no coagulation or precipitation of the protein during storage.

It is an object of the present invention to provide a milk containing animal feed composition which can be made up into an aqueous feed which has good storage characteristics over prolonged periods and which is acceptable to young animals. It is a further object to provide aqueous feeds based on milk containing compositions, the feeds having good storage characteristics over prolonged periods and which are acceptable to young animals.

Accordingly the present invention is a milk containing animal feed composition containing as a stabilising agent a complex salt consisting of ammonium, alkali metal or alkaline earth metal ions and formic acid in which the ratio of the acid to ions is in the range from 2 to 1 to 4 to 1 on a chemical equivalent basis.

In a further aspect, the present invention is an aqueous feed based on the above milk containing animal feed composition, the aqueous feed containing as a stabilising agent, a complex salt consisting of ammonium, alkali metal or alkaline earth metal ions and formic acid in which the ratio of the acid to ions is in the range from 2 to 1 to 4 to 1 on a chemical equivalent basis.

The preferred ions are ammonium, sodium and potassium ions. Thus, a preferred complex salt is one consisting of ammonium ions with a ratio of acid to ammonium ions of 4 to 1. This complex salt is a known substance and is commonly called ammonium tetraformate. It is usually in the form of a concentrated aqueous solution.

Another complex salt found to be particularly suitable is one consisting of potassium ions with a ratio of acid to potassium ions of 2 to 1, i.e. the complex salt commonly called potassium diformate. This salt is a solid at normal temperatures.

The milk containing animal feed composition can contain 0.10 to 5.0 percent, preferably 0.5 to 2.0 percent by weight of the complex salt in relation to the total weight of the composition. The optimum quantity of complex salt is likely to vary within that range depending on the salt used and, also, possibly, on the precise composition of the milk containing composition. However, the optimum

2

quantity can be determined by simple storage tests, for example, by storage of the aqueous feed for 3 days at 30°C. Any tendency to coagulation or precipitation can be observed usually. Any tendency to souring or clotting can be determined by monitoring the pH or by acid titration against phenolphthalein using a standard caustic soda solution. Microbial counts can also be carried out in the normal manner.

It has been found that the tendency to coagulation and precipitation is the main limiting factor in determining the optimum quantity of complex salt and that coagulation and precipitation can occur without there being any souring or clotting. The tendency to coagulation and precipitation increases with increasing acid content of the complex salt. Thus, for the diformates the optimum quantity of complex salt may be of the order of 3.5 to 4.5% whereas for the more acid tetraformates the optimum may be of the order of 1.0 to 2.0%.

Aqueous feeds are normally made from the solid powder compositions at a dilution of the order of 10:1, so the aqueous feeds can contain 0.01 to 0.5, preferably 0.05 to 0.2 percent by weight in relation to the total volume of the feed. Most suitably the complex salt is incorporated into milk containing animal feed compositions on which the aqueous feed is based. However, it can be added directly to the aqueous feed, e.g. as a concentrated solution.

For convenience of handling, salts which are normally in the form of a concentrated aqueous solution can be converted to solid form by incorporation onto a solid stabiliser composition which can then be added as a component of either the solid milk replacer composition or added directly to the aqueous feed. The stabiliser composition comprises a comminuted solid carrier having the complex salt distributed thereon. An advantage of the stabilising composition is that it facilitates handling and mixing.

The particle size of the carrier is not critical but to facilitate mixing and distribution of the stabiliser composition in the milk replacer composition the particle size is most suitably in the range 5.0 to 2000 microns and preferably in the range 80 to 200 microns.

The carrier can consist of a material which is inert or it can be a nutrient. Most suitably the material should have a large surface area and be capable of adsorbing and/or absorbing the complex salt. Some examples of suitable inert materials are the highly dispersed synthetic silicas, kaolin and other finely divided clays. Some examples of nutrients are the finely divided soluble starches, whey powder, soya flour and microbial protein. Highly dispersed synthetic silicas are particularly suitable materials. Highly dispersed silicas are known in the animal feed industry as carriers of liquids in the production of highly concentrated powder formulations. Examples of suitable silicas are silicon dioxide and/or silicate having a particle size of 5 to 200 microns and a BET specific surface of 100 to 500 $m^2/g$.

The minimum proportion of complex salt to the carrier in the stabiliser composition is not critical and depends largely on the quantity of carrier it is desired to add to the milk replacer composition or the aqueous feed. When the carrier is a nutrient the proportion of the complex salt present in the composition will be related to the quantity of the nutrient required in the milk replacer or aqueous feed.

Examples of suitable proportions of complex salt to carrier in the stabiliser composition are in the range 3:1 to 1:1.5 in relation to the total weight of the composition.

The stabiliser composition can be formed by any of the known techniques for dispersing liquids on carriers. For example, the carrier can be soaked in an aqueous solution of the salt or a solution of the salt can be sprayed onto the carrier to give a free flowing solid.

Complex salts which are normally solid can be incorporated into the milk containing animal feed compositions by simple mixing.

It is a surprising feature of the milk containing animal feed compositions of the present invention that the complex salt retains its stabilising and preservative activity in the aqueous feeds made up from the compositions even if the salt has been first distributed on a carrier to form a stabiliser composition.

It is a feature of the stabilised aqueous feeds of the present invention that they remain acceptable for prolonged periods of storage, e.g. periods of 3 or 4 days even at relatively high temperatures, e.g. temperatures in the range 35°C to 40°C. Furthermore, the feeds can be made up by mixing the milk containing animal feed compositions of the present invention at these high temperatures without adversely affecting the high temperature storage characteristics of the feed.

The milk containing animal feed compositions and aqueous feeds of the present invention are further illustrated by, but not limited to, the following examples.

### Example 1

97.5 grams of a commercially available milk replacer composition containing 18% fat and 24% protein and made from skim milk, whey and fat were mixed with 2.5 grams of a solid stabiliser composition. The stabiliser composition comprised 48 percent by weight of a 75 percent aqueous solution of a complex salt consisting of ammonium ions and formic acid in which the ratio of the acid to the ammonium ions was in the range 4 to 1 on a chemical equivalent basis, and 52 percent by weight of a highly dispersed silicon dioxide having an average particle size of 5 microns and a BET specific surface area 250 $m^2/g$, the complex salt being distributed on the surface of the silicon dioxide. The stabiliser composition was formed by spraying the complex salt solution onto the silica with mixing to give a free flowing solid. The milk replacer composition thus formed contained 0.9 grams of the complex salt in relation to the total weight of the composition. Another milk replacer composition was prepared in accordance with the procedure described above but containing 0.6 grams of the complex salt. The compositions were numbered A and B respectively.

For purposes of comparison, a control milk replacer composition, C containing no preservative salt was also used. Another two milk replacer compositions D and E were prepared with the known preservative calcium propionate at the same concentrations as the complex salt of compositions A and B. The calcium propionate being a solid was mixed directly with the other components of the milk replacer composition.

The milk replacer compositions were made up to form aqueous feeds by mixing 125 grams of each composition with 0.875 litres of water.

Aliquots of each feed were placed in conical flasks, the flasks plugged with loose cotton wool plugs and incubated at a temperature of 21°C for 3 days. The flasks were sampled at the start and thereafter on the second and third day. Duplicate assays were then made on each sample of the total viable bacterial count using standard known techniques.

The data obtained from the bacterial tests is shown in Table 1. The data demonstrates that feeds based on milk replacer compositions according to the present invention containing a solid stabiliser composition consisting of the complex salt and silicate carrier have a lower bacteriological population when stored than feeds with no preservative salt or containing calcium propionate.

TABLE 1

| Aqueous Feed | Bacterial Count (Incubation at 21°C) | | |
| --- | --- | --- | --- |
| | Day Start | Day Two | Day Three |
| Composition C (Control) | 200 | >5,000 | >10,000 |
| A Composition + Complex Salt | 200 | 180 | 280 |
| D Composition + Calcium propionate | 200 | 795 | >10,000 |
| B Composition + Complex Salt | 200 | 1,280 | >10,000 |
| E Composition + Calcium propionate | 200 | >5,000 | >10,000 |

Example 2

An aqueous feed was made up by mixing 125 grams of the milk replacer composition used in Example 1 with 0.875 litres of water and thereafter adding to the mixture thus formed 1.5 millilitres of an aqueous solution of a complex salt consisting of ammonium ions and formic acid in which the ratio of the acid to the ammonium ions was in the range 4 to 1 on a chemical equivalent basis. The solution had a concentration of 75 percent by weight of the salt. The feed contained 1.2 percent by weight of the complex salt solution in relation to the total solid content on a dry weight basis.

By way of comparison, another aqueous feed was made up in accordance with the procedure described above with the exception that the complex salt was not added. Aliquots of the feed were stored at 21°C and at 37°C and periodic tests were made of the bacteriological count in accordance with the procedure described in Example 1. In addition, the clotting time was tested. The data thus obtained is given in Table 2. The data shows that aqueous feeds in accordance with the present invention containing the complex salt significantly reduce the quantity of bacteria present after storage and significantly delay the onset of clotting.

TABLE 2

| Aqueous Feed | Bacterial count at 3 days | | Time in days taken to clot | |
| --- | --- | --- | --- | --- |
| | 21°C | 37°C | 21°C | 37°C |
| Composition (Control) | 1000 | Clotted not tested | 3—4 | 1 |
| Composition + Complex Salt | 80 | 160 | 11 | 4 |

4

## Example 3

An aqueous feed was made up by mixing 125 grams of the milk replacer composition used in Example 1 with 0.875 litres of water to give a mixture having a solids content of 12.5 percent. 1.5 grams of a 75 percent aqueous solution of a complex salt consisting of ammonium ions and formic acid in which the ratio of the acid to the ammonium ions was in the range 4 to 1 on a chemical equivalent basis were then added to the mixture to give a feed containing 0.9 percent by weight of the complex salt in relation to the total solids (dry weight). Another feed was made up in accordance with the procedure described above but containing 1.2 percent by weight of the complex salt in relation to the total solids content.

By way of comparison, a feed was made up in accordance with the procedure described above with the exception that the complex salt was not added. All feeds were prepared in duplicate and inoculated with equal numbers of cells of the bacterium Salmonella dublin.

The feeds were incubated for 3 days at 21°C and then tested bacteriologically for Salmonella dublin. The data thus obtained is given in Table 3. The data shows that the feeds of the present invention containing the complex ammonium salt (ammonium tetraformate) at the 0.1125 and 0.15 concentrations have a significantly lower Salmonella dublin count than the count for the feed containing no complex salt.

TABLE 3

| Aqueous Feed | Bacterial count at 3 days after incubation at 21°C. Salmonella dublin |
|---|---|
| Composition (Control) | >2,000 |
| Composition + 0.15% Complex Salt | 200 |
| Composition + 0.1125% Complex Salt | 600 |

## Example 4

A commercially available powder milk replacer composition similar to that used in Example 1 but in "instantised" form was used to test the complex salt known as potassium diformate as a preservative.

Aqueous feeds were stored for up to 72 hours at 30°C and a series of experiments were carried out standardised on the following method.

1. Prepare a 1% w/v solution of potassium diformate.
2. Pipette known volumes of this solution into a series of clean beakers and dilute to 200 mls with cold distilled water.
3. Mix 25 g of the milk replacer composition into each solution and measure pH value.
4. Cover beakers with petri dishes to avoid excess evaporation, and place in an incubator at 30 ± 2°C.
5. Measure pH at 24 hour intervals.
6. Record any changes in appearance of the milk solutions at 24 hour intervals.

Using different volumes of solution under 2. above, a series of aqueous feeds containing different quantities of the complex salt were made and tested. The results are shown in Table 4 below with the quantity of potassium diformate expressed as a weight percentage of the aqueous feed. The Table records the pH of the feeds and visual observations of clotting.

TABLE 4

| Time hours | % wt potassium diformate added | | | | | |
|---|---|---|---|---|---|---|
| | 0 | 0.112 | 0.15 | 0.225 | 0.30 | 0.375 |
| 0 | 6.5 | 6.05 | 6.0 | 5.65 | 5.5 | 5.4 |
| 24 | 6.5 | 6.2 | 6.0 | 5.8 | 5.7 | 5.5 |
| 48 | 5.3 | 4.6 | 5.35 | 5.6 | 5.5 | 5.3 |
| | ←—— clotted ——→ | | | | | |
| 72 | 4.65 | 4.4 | 4.5 | 4.7 starting to clot | 5.2 rancid odour | 5.4 v. slight odour |
| | ←———— clotted ————→ | | | | | |

Table 4 shows that 0.15% and higher concentrations of potassium diformate increased the stability of the aqueous feed. The addition of 0.375% increased the stability to 3 days. There was no coagulation or precipitation of protein in any of the experiments.

## Claims

1. A milk containing animal feed composition containing as a stabilising agent a complex salt consisting of ammonium, alkali metal, or alkaline earth metal ions and formic acid in which the ratio of the acid to ions is in the range from 2 to 1 to 4 to 1 on a chemical equivalent basis.

2. A milk containing composition as claimed in claim 1 in which the complex salt consists of ammonium, sodium or potassium ions and formic acid and the ratio of acid to ions is 4 to 1.

3. A milk containing composition as claimed in claim 1 in which the complex salt consists of ammonium, sodium or potassium ions and formic acid and the ratio of acid to ions is 2 to 1.

4. A milk containing composition as claimed in claim 1, 2 or 3 in which the percentage by weight of the complex salt present in relation to the total weight of the composition is in the range 0.10 to 5.0.

5. A milk containing composition as claimed in claim 4 in which the percentage by weight of the complex salt present in relation to the total weight of the composition is in the range 0.5 to 2.0.

6. A milk containing composition as claimed in any one of the preceding claims in which the stabilising agent is present as a component of a stabiliser composition which comprises a comminuted solid carrier having the complex salt distributed thereon.

7. A milk containing composition as claimed in claim 6 in which the comminuted solid carrier has a particle size in the range 5.0 to 2000 microns.

8. A milk containing composition as claimed in either of claims 6 or 7 in which the comminuted solid carrier is a highly dispersed synthetic silica.

9. An aqueous animal feed comprising a milk containing composition, the feed containing as a stabilising agent a complex salt consisting of ammonium, alkali metal or alkaline earth metal ions and formic acid in which the ratio of the acid to ions is in the range from 2 to 1 to 4 to 1 on a chemical equivalent basis.

10. An aqueous animal feed as claimed in claim 9 in which the milk containing composition is a composition as claimed in any one of the preceding claims 2 to 8.

11. An aqueous animal feed as claimed in either claim 9 or 10 in which the complex salt is present in the range 0.01 to 0.5 percent in relation to the total volume of the aqueous feed.

## Revendications

1. Composition à base de lait pour l'alimentation animale contenant en tant qu'agent de stabilisation un sel complexe comprenant des ions d'ammonium, de métal alcalin ou de métal de terres alcalines et de l'acide formique dans lequel le rapport de l'acide aux ions est compris entre 2 à 1 et 4 à 1 sur une base d'équivalence chimique.

2. Composition à base de lait selon la revendication 1, dans laquelle le sel complexe comprend des ions d'ammonium, de sodium ou de potassium et de l'acide formique, le rapport de l'acide aux ions étant de 4 à 1.

3. Composition à base de lait selon la revendication 1, dans laquelle le sel complexe comprend des ions d'ammonium, de sodium ou de potassium et de l'acide formique, le rapport de l'acide aux ions étant de 2 à 1.

4. Composition à base de lait selon l'une des revendications 1, 2 ou 3, dans laquelle le pourcentage en poids du sel complexe présent par rapport au poids total de la composition est compris entre 0,10 et 5,0.

5. Composition à base de lait selon la revendication 1, dans laquelle le pourcentage en poids du sel complexe présent par rapport au poids total de la composition est compris entre 0,5 et 2,0.

6. Composition à base de lait selon l'une des revendications précédentes dans laquelle l'agent de stabilisations est présent en tant qu'élément d'une composition stabilisante qui comprend un porteur solide finement broyé sur lequel le sel complexe est distribué.

7. Composition à base de lait selon la revendication 6, dans laquelle le porteur solide finement broyé présente une granulométrie comprise entre 5,0 et 2 000 microns.

8. Composition à base de lait selon l'une des revendications 6 ou 7, dans laquelle le porteur solide finement broyé est une silice synthétique fortement dispersée.

9. Aliment aqueux pour animaux comprenant une composition à base de lait, l'aliment contenant en tant qu'agent de stabilisation un sel complexe comprenant des ions d'ammonium, de métal alcalin ou de métal de terres alcalines et de l'acide formique dans lequel le rapport de l'acide aux ions est compris entre 2 à 1 et 4 à 1 sur une base d'équivalence chimique.

10. Aliment aqueux pour animaux selon la revendication 9, dans lequel la composition à base de lait est une composition selon l'une des revendications 2 à 8 précédentes.

11. Aliment aqueux pour animaux selon l'une des revendications 9 ou 10, dans lequel le sel complexe est présent entre 0,1 et 0,5% par rapport au volume total de l'aliment aqueux.

## Patentansprüche

1. Milchhaltiges Futtermittel für Tiere, enthaltend als als Stabilisierungsmittel ein Komplexsalz bestehend aus Ammonium-, Alkalimetall- oder Erdalkalimetall-Ionen und Ameisensäure, in dem das Verhältnis der Säure zu den Ionen auf chemischer Äquivalent-Basis im Bereich von 2 zu 1 bis 4 zu 1 liegt.

2. Milchhaltiges Futtermittel nach Anspruch 1, dadurch gekennzeichnet, daß das Komplexsalz aus Ammonium-, Natrium- oder Kalium-Ionen und Ameisensäure besteht und das Verhältnis Säure zu Ionen 4 zu 1 beträgt.

3. Milchhaltiges Futtermittel nach Anspruch 1, dadurch gekennzeichnet, daß das Komplexsalz aus Ammonium-, Natrium- oder Kalium-Ionen und Ameisensäure besteht und das Verhältnis Säure zu Ionen 2 zu 1 beträgt.

4. Milchhaltiges Futtermittel nach Anspruch 1, 2 oder 3, dadurch gekennzeichnet, daß der Gewichts-Prozentsatz des vorhandenen Komplexsalzes im Verhältnis zum Gesamtgewicht des Futtermittels im Bereich von 0,10 bis 5,0 liegt.

5. Milchhaltiges Futtermittel nach Anspruch 4, dadurch gekennzeichnet, daß der Gewichts-Prozentsatz des vorhandenen Komplexsalzes im Verhältnis zum Gesamtgewicht des Futtermittels im Bereich von 0,5 bis 2,0 liegt.

6. Milchhaltiges Futtermittel nach Anspruch 1 bis 5, dadurch gekennzeichnet, daß das Stabilisierungsmittel als eine Komponente einer Stabilisierungs-Zusammensetzung vorliegt, die einen zerkleinerten festen Träger enthält, auf dem das Komplexsalz verteilt ist.

7. Milchhaltiges Futtermittel nach Anspruch 6, dadurch gekennzeichnet, daß der zerkleinerte feste Träger eine Teilchengröße im Bereich von 5,0 bis 2000 $\mu$m besitzt.

8. Milchhaltiges Futtermittel nach Anspruch 6 oder 7, dadurch gekennzeichnet, daß der zerkleinerte feste Träger ein hochdisperses synthetisches Siliciumdioxid ist.

9. Wäßriges Futtermittel für Tiere, enthaltend eine milchhaltige Zubereitung, dadurch gekennzeichnet, daß das Futtermittel als Stabilisierungsmittel ein Komplexsalz bestehend aus Ammonium-, Alkalimetall- oder Erdalkalimetall-Ionen und Ameisensäure enthält, in dem das Verhältnis der Säure zu den Ionen auf chemischer Äquivalent-Basis im Bereich von 2 zu 1 bis 4 zu 1 liegt.

10. Wäßriges Futtermittel für Tiere nach Anspruch 9, dadurch gekennzeichnet, daß die milchhaltige Zubereitung ein Futtermittel nach den vorhergehenden Ansprüchen 2 bis 8 ist.

11. Wäßriges Futtermittel für Tiere nach Anspruch 9 oder 10, dadurch gekennzeichnet, daß das Komplexsalz im Bereich von 0,01 bis 0,5 Prozent im Verhältnis zum Gesamtvolumen des wäßrigen Futtermittels vorliegt.